# EUROPÄISCHE PATENTSCHRIFT

(11) **EP 2 146 798 B1**
(45) Veröffentlichungstag und Bekanntmachung des Hinweises auf die Patenterteilung: **17.04.2019**
(21) Anmeldenummer: 08758062.7
(22) Anmeldetag: 15.05.2008
(51) Int. Cl.: B01J 14/00, B01J 19/24, C01B 11/02

(54) **VORRICHTUNG UND VERFAHREN ZUR ERZEUGUNG VON FLUIDEN REAKTIONSPRODUKTEN**
APPARATUS AND PROCESS FOR MANUFACTURING FLUID REACTION PRODUCTS
DISPOSITIF ET PROCEDÉ DE PRODUCTION DE PRODUITS DE REACTION FLUIDES

(30) Priorität: 16.05.2007 DE 10723085
(43) Veröffentlichungstag der Anmeldung: 27.01.2010
(73) Patentinhaber: Grundfos Holding A/S, 8850 Bjerringbro (DK)
(72) Erfinder: GUNZINAM, Franz, 75056 Sulzfeld (DE); STRAUCH, Roland, 69231 Rauenberg (DE); RESS, Wolfgang, 75045 Walzbachtal (DE); STEMICK, Ulrich, 76327 Pfinztal (DE)
(74) Vertreter: Patentanwälte Vollmann Hemmer Lindfeld Partnerschaft mbB
(86) Internationale Anmeldenummer: PCT/DE2008/000807
(87) Internationale Veröffentlichungsnummer: WO 2008/138323

(56) Entgegenhaltungen:
- WO-A-2006/077016
- GB-A- 2 141 487
- US-A1- 2002 038 676
- US-A1- 2002 061 263
- US-A1- 2003 138 371
- US-B1- 6 394 043
- US-B1- 6 520 218

## Beschreibung

Die nachfolgende Erfindung bezieht sich auf eine Vorrichtung und ein Verfahren zur Erzeugung fluider Reaktionsprodukte, insbesondere zur Erzeugung von wässriger Chlordioxidlösung oder Natriumhypochloritlösung.

### STAND DER TECHNIK

Aus dem Stand der Technik sind verschiedene Vorrichtungen zur Erzeugung fluider Reaktionsprodukte bekannt, auch zur Erzeugung von wässriger Chlordioxid- oder Natriumhypochloritlösung.

Viele fluide Reaktionsprodukte sind am besten zur Verwendung geeignet, wenn sie *in situ* produziert oder zumindest baldmöglichst nach Erzeugung verwendet werden. Der Grund hierfür liegt darin, dass Lösungen, welche die reaktiven Spezies in hohen Konzentrationen enthalten, vielfach langfristig instabil sind und sich entsprechend rasch in ihre Spaltprodukte zersetzen, wobei die Gefahr der Entstehung von unerwünschten Intermediaten oder Endstufen besteht, was eine unkontrollierte Änderung der Zielkonzentration zur Folge hat. Entsprechend verdünnte und damit gegebenenfalls stabilere Lösungen der Zielreaktionsprodukte erfordern hohen Lager- und Transportaufwand, abhängig vom Zieleinsatzort. Ein solch sensibles Reaktionsprodukt ist das Chlordioxid in wässeriger Lösung, das bei hohen Konzentrationen von etwa 20 g pro Liter und höher rasch unerwünschte Spaltprodukte bildet. Die Darstellung des Chlordioxids erfolgt im Stand der Technik mit Salzsäureüberschuss in definierten Volumenverhältnissen, um den stöchiometrischen Anforderungen zu entsprechen und die entsprechenden Zielumsätze zu erlangen. Daher ist bei der Darstellung ein wesentlicher Punkt die Überwachung der Dosierströme von Salzsäure (HCl) und Natriumchlorit (NaClO₂).

So beschreibt die ProMinent Dosiertechnik GmbH in den technischen Datenblättern einer Chlordioxidanlage "Bello Zon" 2006 einen Reaktor zur Herstellung von Chlordioxid, der Einlassöffnungen für die Edukte zur Chlordioxiddarstellung und eine Auslassöffnung für Reaktionsprodukte aufweist, wobei die Edukte über jeweils eine Dosierpumpe dem Reaktor zugeführt werden und die zugeführte Menge an Edukten über jeweils eine Vorrichtung zur Dosierüberwachung geregelt wird. Diese Anlage weist eine Vielzahl Dosierüberwachungsgeräte und Dosierpumpen auf, die im Hinblick auf Störungen anfällig sind. Das entsprechende mit der Vorrichtung durchgeführte Verfahren zur Herstellung von Chlordioxid erfordert die Vorlage einer vorbestimmten Menge Verdünnungswasser und die von der jeweiligen Dosierüberwachung gesteuerte Zugabe von exakt bestimmten Mengen an Salzsäure und Natriumchlorit durch die jeweilige Dosierpumpe, so dass die zuzugebenden Mengen an Salzsäure und Natriumchlorit immer von der bereits vorgelegten Menge an Verdünnungswasser abhängen. Entsprechend lassen sich Dosierfehler bei den gleichzeitig oder nacheinander zugegebenen Reaktanden nicht oder nur schwer ausgleichen.

In der Gebrauchsmusterschrift DE 296 228 38 U1 wird eine Vorrichtung zur Herstellung von Chlordioxid beansprucht, wobei die Vorrichtung eine Mischkammer aufweist, die im Wesentlichen dadurch gekennzeichnet ist, dass die Edukte über einen erfindungsgemäßen Verteiler in die Mischkammer überführt werden.

In den technischen Datenblättern zu einer Chlordioxid-Bereitungsanlage Diox-A-10 der Wallace & Tiernan GmbH, 2006, wird ein Reaktor mit einer Reaktionskammer, einem Vorlagebehälter, einem Aufnahmebehälter zur Bevorratung der Edukte Salzsäure und Natriumchlorit, die mit dem Reaktor in fluidischer Verbindung stehen, beschrieben, wobei ein Durchflussmehgenzähler die Zugabemengen der Edukte bestimmt, verbunden mit der entsprechenden elektronischen Steuerung. Auch diese Anlage weist eine Vielzahl von Dosierpumpen und -kontrollvorrichtungen auf, die störungsanfällig sind und die Anlage komplex gestalten.

Die Patentschrift DE 198 44 179 B4 legt ein Verfahren zur Einstellung von Chlordioxid dar, bei dem die Redoxspannung gemessen und in Abhängigkeit vom freien Chlor mittels mitlernender Fuzzylogik die Menge der Zugabe an Chlordioxid in eine zu desinfizierende Menge an Wasser bestimmt wird.

Ein weiteres, ebenso sensibles Reaktionsprodukt ist das Natriumhypochlorit, das durch Einleiten von Chlorgas in Natronlauge oder durch Elektrolyse einer Natriumchlorid-Lösung nach folgender Summen-Reaktionsgleichung
2 NaOH + Cl₂ →NaCl + NaClO + H2O

hergestellt werden kann. Die Reaktion des Einleitens von Chlorgas in Natronlauge verursacht deswegen Probleme, da formal eine Hydrolyse des Chlors mit nachfolgender Neutralisation der Edukte entstehende Salzsäure bzw. der hypochlorigen Säure erfolgt, verbunden mit starker Wärmefreisetzung, so dass unerwünschte Nebenprodukte entstehen. Nachteilig ist somit die Wärmeabfuhr im Herstellungsprozess und die erforderliche Prozessoptimierung hinsichtlich der Verringerung der Entstehung unerwünschter Nebenprodukte.

Der zweite Weg zur Darstellung des als Bleich- oder Desinfektionsmittel geeigneten Natriumhypochlorits erfolgt über die Elektrolyse, zu deren Durchführung das Salz in einer wässrigen Lösung vorgelegt wird, und wobei die in Lösung entstehenden Chlorid- und die Oxoniumionen hydrolysiert werden. Zurück bleiben die Natrium- und die Hydroxidionen, die die Natronlauge bilden. Für die technische Umsetzung ist es wichtig, dass das entstandene Chlor nicht in Kontakt mit den Hydroxid-Ionen kommt, weil dadurch ein Chlorid/Hypochlorit-Gemisch entstehen würde. Die aus dem Stand der Technik bekannten geeigneten und selektiven Verfahren umfassen daher das Diaphragmaverfahren, das zur Desinfektion etwa in Schwimmbädern eingesetzt wird, wobei es jedoch kritisch ist, die zuzugebenden Mengen exakt zu dosieren, so dass Ammoniak bzw. Amine zur Gewährleisung einer ausreichenden Desinfektion über die Stufe des Monochloramins hinaus chloriert werden.

Ein Verfahren zur Herstellung einer Alkalimetallhypochloritlösung, das eine ungeteilte Elektrolysezelle verwendet, ist aus der WO 2006/077016 A1 von Siemer et al. bekannt. Dieses Dokument adressiert bereits das Problem der vor-Ort-Erzeugung von Natriumhypochlorit, um eine definierte Konzentration der Zielverbindung zu schaffen, da die aus dem Stand der Technik bekannten Vorrichtungen zur Darstellung des Hypochlorits auf Grund der einzusetzenden Steuerungs- und Regelungstechnik einschließlich der erforderlichen Sensoren sehr wartungsintensiv und unzuverlässig sein können. Daher beschreibt die WO 2006/077016 A1 eine Vorrichtung mit ungeteilter Elektrolysezelle, bei der die Stromstärke derart fest eingestellt wird, dass die Konzentration von bei der Elektrolyse anfallendem Chlorat auf eine Höchstmenge begrenzt wird.

Den im Stand der Technik bekannten Anlagen zur Erzeugung von wässriger Chlordioxid- und von Natriumhypochloritlösung ist zumeist eine Vielzahl an erforderlichen Dosierpumpen und Dosierkontrollvorrichtungen gemein. Der Reaktor und ein entsprechender Behälter zur Bevorratung der fertigen Chlordioxid-, respektive Natriumhypochloritlösung sind über komplex gestaltete Vorrichtungen miteinander verbunden, die Magnetventile, Dosierpumpen und Dosierkontrollvorrichtungen enthalten. Diese Bauteile sind störungs- und verschleißanfällig, verbrauchen Energie und sind daher kostenintensiv.

US 2003/0138371 A1 offenbart eine Vorrichtung und ein Verfahren zur Erzeugung von gasförmigen Chlordioxid-Chlor-Gemischen. US 2002/0061263 A1 offenbart eine Vorrichtung und ein Verfahren zur Erzeugung einer Chlordioxidlösung. US 2002/0038676 A1 offenbart eine Vorrichtung und ein Verfahren zum Nachfüllen eines Behälters mit Füllstandsbestimmungen, die Schaltpunkte umfassen.

Ausgehend von diesem Stand der Technik liegt der vorliegenden Erfindung die Aufgabe zu Grunde, eine verbesserte Vorrichtung und ein Verfahren zur Erzeugung fluider Reaktionsprodukte bereit zu stellen. Diese Aufgabe wird durch eine Vorrichtung mit den Merkmalen des Anpruchs 1 und durch ein Verfahren mit den Merkmalen des Anspruchs 13 gelöst. Weiterbildungen werden durch die Unteransprüche beschrieben.

Die vorliegende Erfindung bezieht sich auf eine Vorrichtung zur Erzeugung eines fluiden Reaktionsprodukts, die über einen Reaktionsraum mit darin angeordneter Vorrichtung zur Füllstandsbestimmung verfügt, die mit einer Regelungseinheit kommuniziert, so dass die Zufuhr von Reaktanden in den Reaktionsraum vorteilhaft unter Berücksichtigung ihrer Füllstandshöhe im Reaktionsraum geregelt erfolgen kann. Die Beendigung der Zuführung eines Reaktanden kann dabei zugleich die Zuführung eines nächsten Reaktanden auslösen, so dass sequenzielle Zuführung mehrerer fluider Reaktanden in den Reaktionsraum geregelt erfolgt, ohne dass Dosierfehler auftreten können. Damit können auf einfachste Weise zuverlässig fluide Reaktionsprodukte, die aus mehreren Reaktanden geschaffen werden, mit exakten Konzentrationen hergestellt werden.

Der Reaktionsraum steht derart in fluidischer Verbindung mit einem Aufnahmeraum für Reaktionsprodukt, dass das Reaktionsprodukt unmittelbar nach seiner Fertigstellung in den Aufnahmeraum fließen kann.

Ein Ausführungsbeispiel bezieht sich auf eine Überführungsvorrichtung, die eine fluidische Verbindung zwischen Aufnahme- und Reaktionsraum bereitstellt. Die Überführungsvorrichtung ist auf einfache Weise als ko-axial ausgebildeter Siphon gestaltet, wodurch vorteilhaft die Verwendung verschleißanfälliger Ventile entfällt. Ferner erübrigt sich bei der Verwendung des erfindungsgemäß ausgestalteten Siphons oder, respektive, Überlaufs, eine Betätigung durch einen Bediener. Damit wird die Gesamtvorrichtung in ihrer Konstruktionsweise vorteilhaft einfach, kostengünstig und weist eine geringe Verschleißanfälligkeit auf.

Weitere Ausführungsbeispiele beziehen sich auf die Ausgestaltung der Überführungsvorrichtung.

Die Vorrichtung zur Füllstandsbestimmung, die in dem Aufnahmeraum angeordnet ist und die in direktem Kontakt mit dem überführten Reaktionsprodukt steht, weist einen Schaltpunkt auf, über den die Regelungseinheit zu einer Operation veranlasst wird. Damit kann vorteilhaft bei Entleerung des Aufnahmeraums und dem gemessenen Niedrigst-Füllstand eine neue Produktion von Reaktionsprodukt, wie Chlordioxidlösung oder Natriumhypochloritlösung, veranlasst werden, oder alternativ kann eine bereits frisch hergestellte Charge, die im Reaktionsraum steht, zum Überlaufen und Befüllen des Aufnahmeraums gebracht werden. Somit steht vorteilhaft stets frisches Produkt zur Verwendung bereit, das von definierter, gleich bleibender Qualität ist.

Ein weiteres Ausführungsbeispiel bezieht sich explizit auf die Darstellung einer wässerigen Chlordioxidlösung aus den Reaktanden Wasser, Salzsäure und Natriumchlorit. Vorteilhaft wird Wasser im Reaktionsraum vorgelegt, ehe nach Erreichen eines ersten Schaltpunkts, der die Zielfüllstandshöhe des Wassers bestimmt, von der Regelungseinheit die Zugabe der Salzsäure und dann des Natriumchlorits veranlasst wird, bis die gewünschten Volumina derselben zugeführt wurden. Die Reaktion zu Chlordioxid erfolgt im vorgelegten Wasser, und die entstandene Lösung wird durch eine abschließende Wasserzugabe bis hin zu einem letzten Schaltpunkt auf die gewünschte, stets gleich bleibende Konzentration gebracht, wobei eine gesicherte Qualität der Chlordioxidlösung erreicht wird.

Noch ein Ausführungsbeispiel bezieht sich auf die Darstellung einer wässerigen Natriumhypochloritlösung aus den Reaktanden Wasser und Natriumchloridsole, wobei die Vorrichtung um eine Elektrolysezelle zur in-situ-Elektrolyse von Natriumchloridsole ergänzt wird, so dass vorteilhaft unmittelbar in Lösung Natriumhypochlorit erzeugt und dann mit Wasser auf die gewünschte Verdünnung gebracht wird, wobei das Vorlegen der Sole und die Ergänzung mit Verdünnungswasser mit den erfindungsgemäßen, wartungsarmen Komponenten zur Füllstandsbestimmung erfolgt, so dass eine Natriumhypochloritlösung mit konstanter Konzentration unter Vermeidung von Nebenproduktentstehung erzeugt wird.

Schließlich wird in einem weiteren Ausführungsbeispiel Bezug auf eine Apparatur, respektive eine Anlage, zur Produkterzeugung genommen, die die erfindungsgemäße Vorrichtung zur Erzeugung fluider Reaktionsprodukte, insbesondere zur Erzeugung von wässriger Chlordioxidlösung oder alternativ von Natriumhypochloritlösung umfasst. Diese Apparatur schließt vorteilhaft auch die geschickte Anordnung von Eduktreservoirs sowie Reaktions- und Aüfnahmeraum und aller fluidischer Verbindungen in einem Gehäuse, das die gesamte Anordnung von äußeren Einflüssen schützt, ein. Vorteilhaft kann ein Verbrauchersystem direkt mit der Produktlösung beaufschlagt werden kann, da diese keinen Qualitätsschwankungen unterliegt.

Diese und weitere Vorteile werden in der nachfolgenden Beschreibung unter Bezug auf die Figuren näher beschrieben.

### KURZBESCHREIBUNG DER FIGUREN

Der Bezug auf die Figuren in der Beschreibung dient der Unterstützung der Beschreibung. Gegenstände oder Teile von Gegenständen, die im Wesentlichen gleich oder ähnlich sind, können mit denselben Bezugszeichen versehen sein. Die Figuren sind lediglich schematische Darstellungen von Ausführungsbeispielen der Erfindung. Es zeigt:
**Fig. 1** eine Längsschnittansicht des Reaktor- und des Aufnahmeraumes der Vorrichtung zur Erzeugung einer wässrigen Chlordioxidlösung,
**Fig. 1a** eine Längsschnittansicht des Reaktor- und des Aufnahmeraumes der Vorrichtung zur Erzeugung einer Natriumhypochlorit-Lösung,
**Fig. 2** eine Längsschnittansicht der Vorrichtung aus Fig. 1, entlang einer Sichtlinie B-B, zur Darstellung einer Chlordioxid-Lösüng,
**Fig. 2a** eine Längsschnittansicht einer Reaktoreinheit entlang einer Sichtlinie B-B zur Darstellung einer Natriumhypochlorit-Lösung,
**Fig. 3a** eine Querschnittsansicht des Reaktionsraumes der Vorrichtung zur Erzeugung einer wässrigen Chlordioxidlösung,
**Fig. 3b** eine Teillängsschnittansicht entlang einer Sichtlinie A-A der Querschnittsansicht des Reaktionsraumes aus Figur 3a,
**Fig. 3c** eine Seitenansicht des Reaktionsraumes und eines Teils des Aufnahmeraumes der Vorrichtung zur Erzeugung einer wässrigen Chlordioxidlösung,
**Fig. 3d** eine Querschnittsansicht des Reaktionsraumes der Vorrichtung zur Erzeugung einer wässrigen Chlordioxidlösung,
**Fig. 4** eine Vorderansicht einer Chlordioxid-Anlage mit der Vorrichtung zur Erzeugung einer wässrigen Chlordioxidlösung,
**Fig. 4a** eine Vorderschnittansicht einer Anlage zur Darstellung von Natriumhypochlorit-Lösung mit der Vorrichtung umfassend die Elektrolysezelle sowie den Reaktor- und den Aufnahmeraum zur Erzeugung und Aufnahme der wässrigen Natriumhypochlorit-Lösung,
**Fig. 4b** eine Vorderschnittansicht einer Anlage zur Darstellung von Natriumhypochlorit-Lösung mit der Vorrichtung umfassend die Elektrolysezelle sowie den Reaktor- und den Aufnahmeraum zur Erzeugung und Aufnahme der wässrigen Natriumhypochlorit-Lösung mit Vorratsbehälter für Salz und Druckerhöhungs- bzw. Druckreduziereinheit.

### BESCHREIBUNG

Der Gegenstand der vorliegenden Erfindung dient der Produktion von fluiden Reaktionsprodukten, die entstehen, wenn zwei oder mehrere Reaktanden oder "Edukte" in Gegenwart eines Lösungsmittels zu einem "Produkt" abreagieren. Grundsätzlich kann das Lösungsmittel ein organisches oder anorganisches Lösungsmittel sein, es kommen auch Lösungsmittelgemische in Frage, die im Reaktionsraum durch Zusammenführen zweier oder mehrerer Lösungsmittelkomponenten wie etwa Wasser und Alkohol entstehen können.

Ein solches Reaktionsprodukt ist Chlordioxid ClO₂, das aus Natriumchlorit NaClO₂ und Salzsäure HCl in Wasser H₂O entsteht. Der Fachmann kennt weitere Reaktionsprodukte, die sich analog zu der obigen ClO₂-Darstellung darstellen lassen. Ein weiteres Reaktionsprodukt ist Natriumhypochlorit NaOCl, bzw. eine wässerige Lösung desselben, die ebenfalls vorteilhaft unmittelbar vor Gebrauch erzeugt werden sollte, damit der Anteil an Dissoziationsprodukten möglichst gering ist, wenn die Lösung zum Einsatz kommt.

Die erfindungsgemäßen Vorrichtung gemäß Anspruch 1 umfasst zur Erzeugung des fluiden Reaktionsprodukts einen Reaktor mit einem Reaktionsraum, eine in dem Reaktionsraum angeordnete Vorrichtung zur Füllstandsbestimmung, eine Anzahl fluidischer Verbindungen zur Zuführung von fluiden Reaktanden in den Reaktionsraum und eine Regelungseinheit. Damit kann, da die Vorrichtung zur Füllstandsbestimmung in dem Reaktionsraum mit den zugeführten Fluiden in direktem Kontakt steht und da die Vorrichtung zur Füllstandsbestimmung entsprechend der Anzahl der zugeführten Reaktanden Schaltpunkte umfasst, die mit der Regelungseinheit in operativem Kontakt steht, die Zuführung der fluiden Reaktanden in den Reaktionsraum geregelt werden. Unter Schaltpunkt wird somit vorliegend verstanden, dass entlang der Höhe des Reaktorraumes, dessen Innenvolumen exakt bekannt ist, Füllstandshöhen, respektive Punkte, definiert sind, bei deren Erreichen die Vorrichtung zur Messung des Füllstandes ein Signal an eine Regelungseinheit übermittelt.

Die Regelung umfasst, dass durch das Messen des Füllstandes der einen Komponente bis zu deren gewünschter Füllstandshöhe, die ihrem entsprechenden Schaltpunkt entspricht, nicht nur die entsprechenden Volumina der zugeführten Reaktanden bestimmt werden, sondern es wird zugleich geregelt, ob und wann ein nächster Reaktand in den Reaktionsraum überführt wird. Damit erfolgt vorteilhaft eine geregelte sequenzielle Zufuhr von Reaktanden.

Der Reaktionsraum steht über eine. Überführungsvorrichtung mit einem Aufnahmeraum direkt in fluidischer Verbindung, so dass die Überführung von Produkt unter Ausnutzung der Schwerkraft erfolgen kann. Unter "fluidischer Verbindung" wird verstanden, dass zwei Orte derart miteinander verbunden sind, dass zwischen ihnen ein Fluid mono- oder bidirektional fließen kann, gegebenenfalls unterstützt durch Fördermittel wie Pumpen oder ähnliche.

Grundsätzlich kann, falls dies erforderlich sein sollte, der Aufnahmeraum auch beabstandet unterhalb des Reaktionsraumes, oder, wenn möglicherweise räumliche Zwänge es erfordern, auch neben oder beabstandet neben dem Reaktionsraum angeordnet sein. Entsprechend sind zur Fluidüberführung dann jedoch zusätzliche Mechanismen wie Pumpen und weiteres zwischen dem Reaktions- und dem Aufnahmeraum erforderlich.

Der Aufnahmeraum kann außerdem mit einer Elektrolysezelle bestückt sein, die eine hylbzylindrische Aussparung aufweisen kann, so dass sie teilweise um den mittleren Abschnitt einer zylindrischen Überführungsvorrichtung zur Überführung des Produkts in einen Aufnahmeraum angeordnet werden kann.

In den figurativ dargestellten bevorzugten Ausführungsformen ist zur Überführung ein einfacher koaxial ausgeführter Siphon eingesetzt, der wirkungsvoll und wenig störungsanfällig ist und der der Vorrichtung zu entsprechender Robustheit und Langlebigkeit bei einfachster und geschickter Handhabung verhilft.

Im Wesentlichen kommuniziert in der erfindungsgemäßen Vorrichtung sowohl der Reaktionsraum als auch der Aufnahmeraum mit einer Regelungseinheit, wodurch auch eine Kommunikation zwischen den beiden Räumen erfolgt, und wobei die Regelungseinheit entsprechend der Füllstände der entsprechend zugeführten Reaktanden, respektive des Produkts, Operationen veranlasst, die das Befüllen und Entleeren der entsprechenden Räume bewirken. Das bedeutet, dass ein Reaktand, der bis zu einem Schaltpunkt in den entsprechenden Raum gefüllt wurde und der somit mit dem gewünschten Volumen dort vorhanden ist, über die Vorrichtung zur Füllstandsbestimmung ein Signal auslöst, das an eine Regelungseinheit weitergeleitet wird und dort eine Folgeoperation auslöst.

Eine solche Operation kann, bei Kopplung der Regelungseinheit an ein entsprechendes Reaktandenreservoir etwa, ein Stoppen der Zufuhr des Reaktanden sein. Weitergehende Operationen können das Veranlassen der Überführung eines nächsten Reaktanden - bei entsprechender Kopplung an ein zweites Reaktandenreservoir - sein, oder die Veranlassung einer Pausen- oder Ruhezeit. Eine Vorrichtung zur Füllstandsbestimmung in dem Aufnahmeraum, der ein Speicher oder Reservoir für fertiges und verwendungsbereites Produkt ist, kann dort entsprechend den Füllstand "leer" messen und über ein entsprechendes Signal an die Regelungseinheit die Zuführung von im Reaktionsraum bereits fertig gestelltem Produkt oder die Erzeugung von neuem Produkt veranlassen.

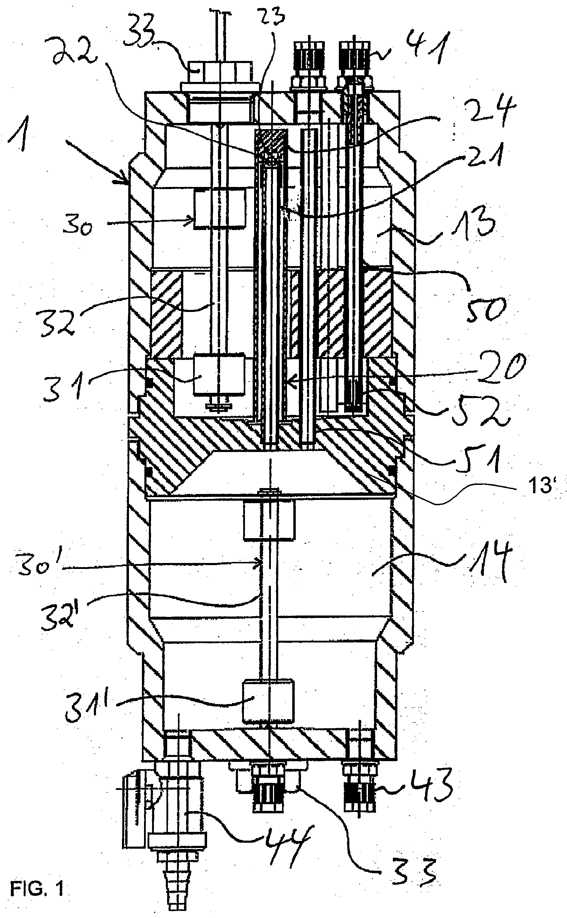

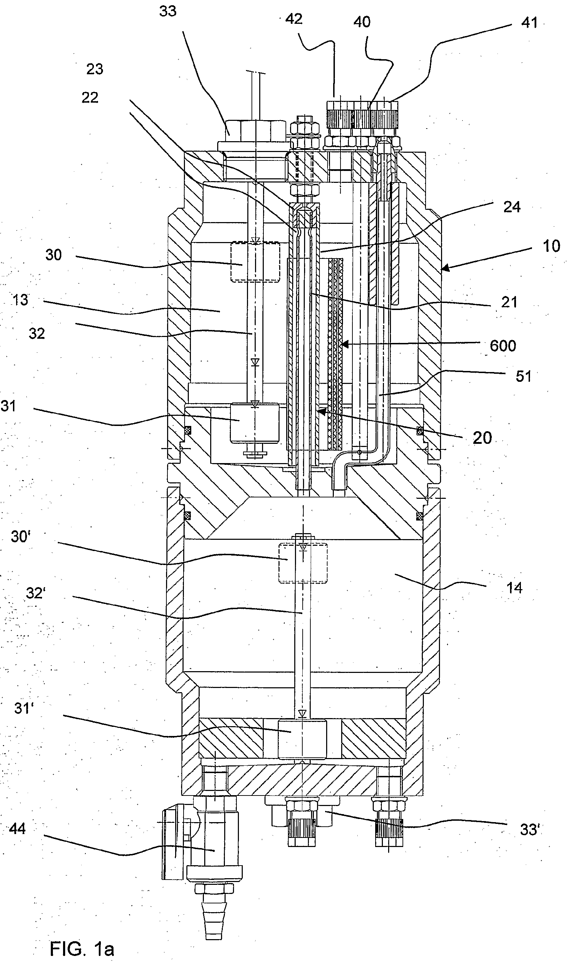

**Fig. 1** zeigt eine erfindungsgemäße Vorrichtung 1 zur Erzeugung einer Chlordioxidlösung. Die Vorrichtung 1 umfasst einen Reaktor mit einem Reaktionsraum 13, in dem eine erste Vorrichtung zur Füllstandsbestimmung angeordnet ist.

**Fig. 1a** zeigt die erfindungsgemäße Vorrichtung 10 zur Erzeugung einer Natriumhypochloritlösung. Die Vorrichtung 10 umfasst zusätzlich zu den in Vorrichtung 1 enthaltenen Komponenten noch eine im Reaktionsraum 13 angeordnete Elektrolysezelle 600, die dazu dient, eine Sole, die als flüssiger Reaktand vorgelegt wird, zu.

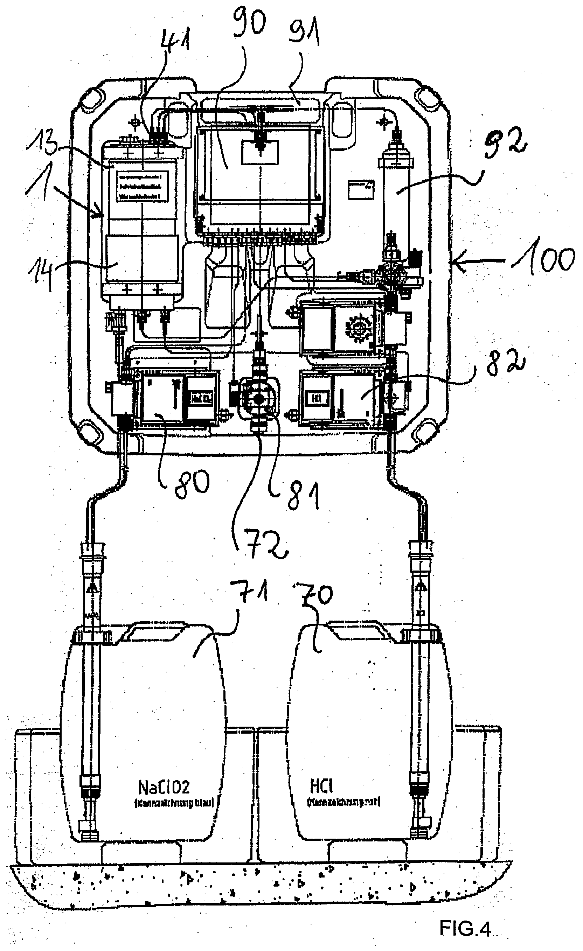

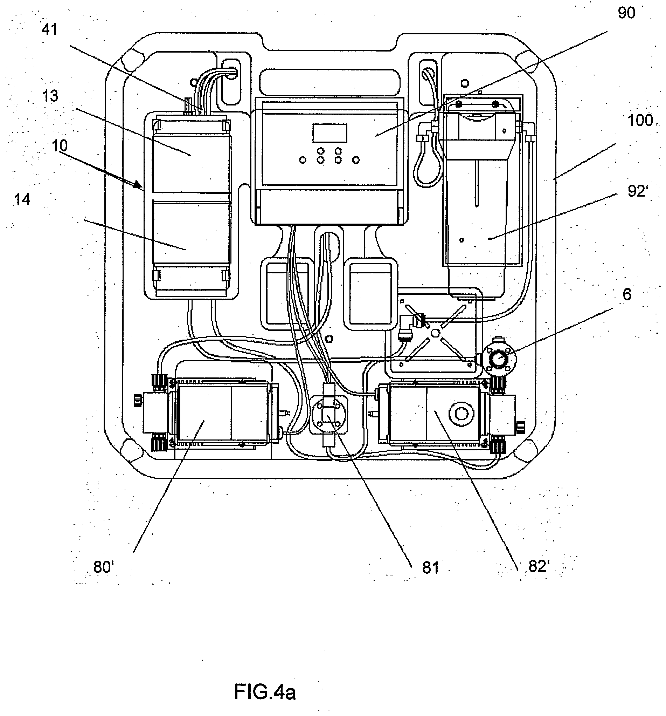

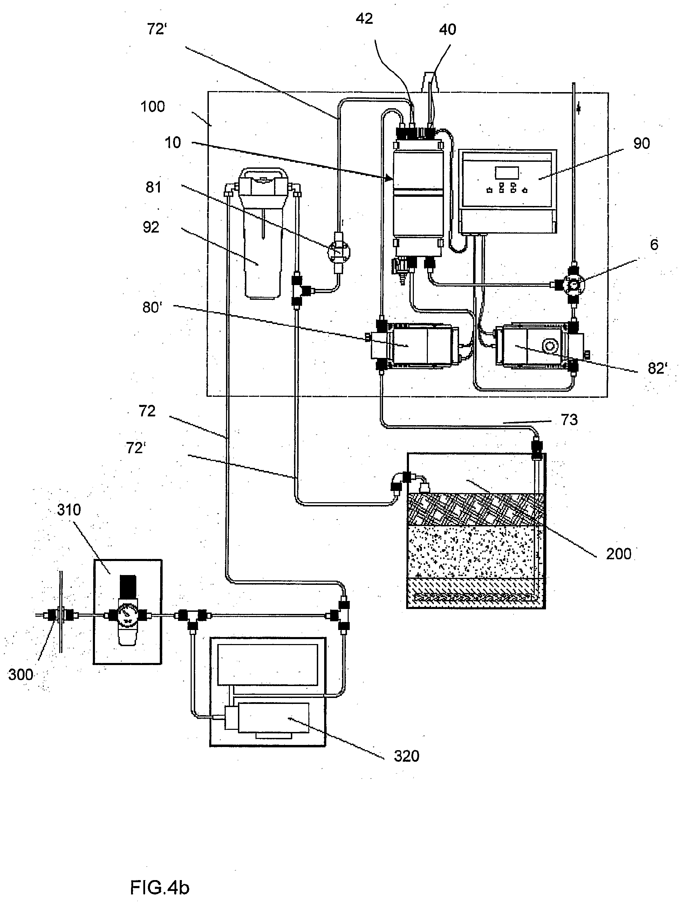

Für die Erzeugung von Chlordioxid wird eine Anlage bereitgestellt, die die erfindungsgemäße Vorrichtung 1 umfasst. Da die Zufuhr von Wässer, Natriumchlorit und Salzsäure erforderlich ist, stehen in diesem Falle entsprechende Reservoirs 71, 70, wie in **Fig. 4** gezeigt, über entsprechende Zuführleitungen und Pumpen in fluidischer Verbindung mit dem Reaktionsraum 13. Die Zuführung der Reaktanden kann über Schläuche oder Rohre aus den entsprechenden Reservoirs, die beispielsweise Tonnen sein können, über das in **Fig. 1** gezeigte Anschlussstück 41 bzw. über die auf Grund der Darstellungsweise der Figur nicht ersichtlichen weiteren Anschlusstücke erfolgen. Die Reservoirs sind in **Fig. 1** nicht gezeigt. Wasser wird im Übrigen zumeist über eine Leitung, die vorliegend auch als Reservoir bezeichnet wird, zugeführt.

Üblicherweise wird pro Edukt ein Reservoir zur Verfügung stehen, das über eine Leitung via Anschlussstück 41 mit dem Reaktionsraum 13 verbunden ist. Aber es ist auch denkbar, dass eine Vielzahl an Reservoirs bereits flussaufwärts des Anschlussstücks 41 in eine gemeinsame Leitung münden und dass über T-Stücke, Ventile oder ähnliche Vorrichtungen die selektive Zuführung eines speziellen Reaktanden über das Anschlussstück in den Reaktionsraum erfolgt.

Über das Anschlussstück 41 wird in dem in Fig. 1 gezeigten Reaktor zur Clordioxiddarstellung Wasser als erster Reaktand über eine in den Reaktionsraum reichende Rohrlanze 50 in den Reaktionsraum 13 überführt. Das Wasser wird solange in den Reaktionsraum 13 laufen gelassen, bis über eine Vorrichtung zur Füllstandsbestimmung 30, die vorliegend als eine Schwimmerlanze 32, an der ein Schwimmer 31 so angebracht ist, der sich entlang der Längsachse der Lanze 32 nach unten und oben bewegen kann, ausgebildet ist, der gewünschte Füllstand gemessen wird. Dieser gewünschte Füllstand wird als so genannter "Schaltpunkt" definiert, an dem das Signal, dass der gewünschte Füllstand erreicht ist, an eine in **Fig. 1** figurativ nicht gezeigte Regelungseinheit übermittelt wird.

Diese veranlasst nun eine Operation zur Regelung des weiteren Verfahrens, die darin bestehen kann, etwa die Zufuhr eines zweiten Reaktanden wie Salzsäure HCl zu veranlassen. Dieses Operation kann ferner auch die Weisung enthalten, zwischen der Zufuhr zweier Reaktanden eine gewisse Pausenzeit einzuhalten, die bei den vorliegenden Reaktionen im Bereich um 10 bis 20 Sekunden liegen wird, aber auch länger oder kürzer sein kann, etwa im Bereich von 5 bis 45 Sekunden, oder die im Grenzfall unmittelbar, also nach null Sekunden, oder auch nach einer langen Pause von einer Minute oder sogar darüber erfolgen kann. Diese Pausen betreffen die Ruhezeiten, die zwischen den Zuführungen zweier Reaktanden liegen können; nach der Zugabe des letzten Reaktanden, wobei hier unter "Reaktanden" auch das Lösungsmittel Wasser gemeint ist, kann durchaus eine längere Pause oder "Reifezeit" liegen, die bis zu 1 Stunde dauern kann, jedoch eher im Bereich um einige Minuten, etwa 10 - 20 Minuten liegen wird, da es eher nicht erwünscht ist, die Vorrichtung im Dauerbetrieb allzu lange still stehen zu lassen.

Ein Schwimmer kann grundsätzlich mit einer Schwimmerlanze auf magnetische, optische oder kapazitive Weise oder auch auf andere Weise wechselwirken. In der in **Fig.1** gezeigten Kombination aus Schwimmer 31 und Lanze 32 ist der Schwimmer mit einem Magneten ausgestattet, der mit elektrischen Kontakten der Schwimmerlanze 32 kommuniziert. Der Schwimmer 31 schwimmt somit bis zu einem in der Lanze 32 markierten Schaltpunkt auf, dann erfolgt eine Kommunikation zwischen Schwimmer 31 und Lanze 32, die anzeigt, dass das gewünschte Niveau des Reaktanden im Reaktionsraum 13 erreicht ist, und die Zufuhr des Reaktanden wird gestoppt. Danach kann die Zufuhr eines zweiten Reaktanden durch eine Operation der Regelungseinheit veranlasst werden.

Vorliegend wird für die Darstellung von Chlordioxid zunächst Wasser über eine Rohrlanze 50 in den Reaktionsraum 13 zugeführt, bis der Schwimmer 31 den ersten Schaltpunkt erreicht. Dann wird über eine zweite Rohrlanze 50, die figurativ nicht dargestellt ist, da sie räumlich quasi hinter der ersten Rohrlanze 50 zu liegen kommt, Salzsäure HCl zugefügt, bis der Schwimmer 31 den zweiten Schaltpunkt erreicht. Analog erfolgt die Zugabe von Natriumchlorit NaClO₂ über eine weitere Rohrlanze 50 bis zum Erreichen des dritten Schaltpunktes. Nun liegen alle Reaktionspartner zur Darstellung von wässeriger Chlordioxidlösung vor, und die Reaktion läuft ab, bis ein Reaktionsgleichgewicht erreicht ist. Um die Lösung nun reifen zu lassen, kann die Reifezeit ermöglicht werden, die entsprechend dem Reaktorvolumen im Bereich von wenigen Sekunden bis hin zu einer Stunde liegen kann. Grundsätzlich ist es natürlich auch möglich, die Lösung wesentlich länger in dem Reaktionsraum zu speichern, wenn sich daraus ein ersichtlicher Vorteil ergibt.

Nach Ablauf dieser Reifezeit wird nochmals Wasser H₂O zugefügt, bis der vierte Schaltpunkt und somit auch die Zielkonzentration erreicht ist.

Die fertig gestellte Lösung verbleibt zumindest solange im Reaktionsraum 13, bis die im Aufnahmeraum 14 angeordnete Vorrichtung zur Füllstandsbestimmung 30', die vorliegend ebenfalls einen Schwimmer 31' umfasst, der sich an einer Schwimmerlanze 32' nach oben und unten bewegt, auf Grund des Absinkens des Schwimmers 31' im Aufnahmeraum 14 unter den Schaltpunkt für ein Minimum-Niveau dieses an die Regelungseinheit signalisiert, die mit der zweiten Vorrichtung zur Füllstandsbestimmung 30' ebenfalls operativ gekoppelt ist.

Dieses Signal kann nun eine Operation auslösen, die entweder eine weitere Wasserzugabe im Reaktionsraum 13 veranlasst, so dass das über den vierten Schaltpunkt im Reaktionsraum 13 hinausgehende Exzesswasser bewirkt, dass die fertig bereitete Produktlösung mittels der Überführungsvorrichtung 20 in den Aufnahmeraum 14 läuft. Dies hat zur Folge, dass der Schwimmer 31' im Aufnahmebehälter ansteigt und damit eine Operation zur Unterbrechung der Wasserzugabe in den Reaktionsraum 13 auslöst.

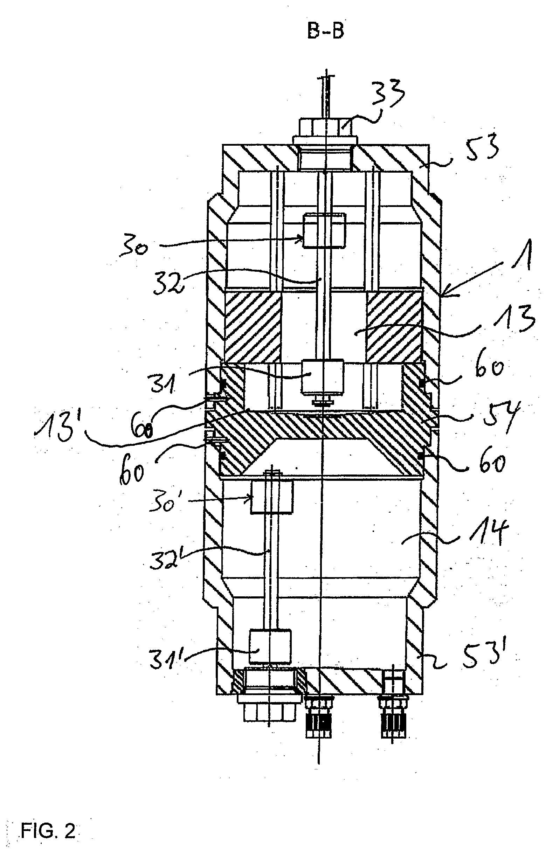

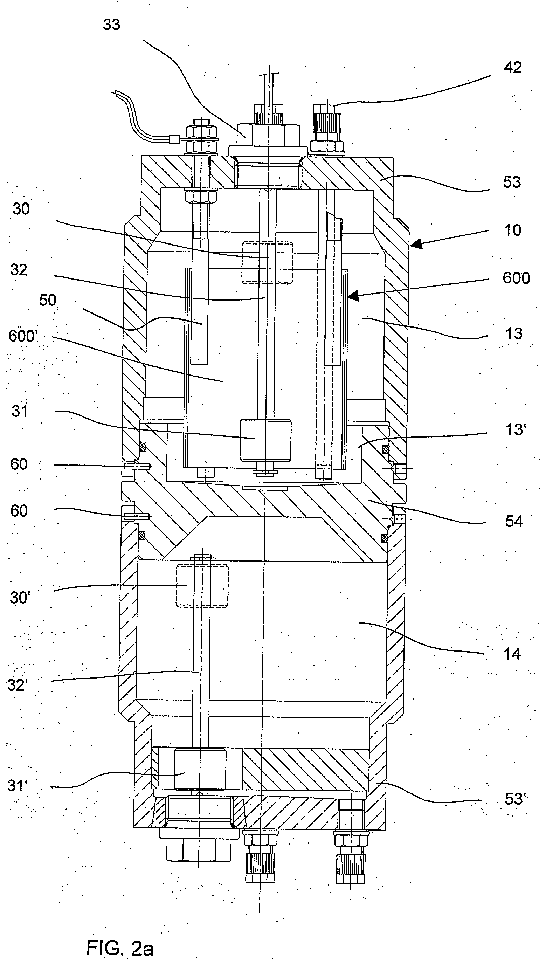

Die Vorrichtungen zur Füllstandsbestimmung 30, 30', die auch aus Fig. 2 deutlich werden, können durch identisch gebaute Schwimmer 31, 31' und Schwimmerlanzen 32, 32', in der die Schaltpunkte angeordnet sind, realisiert sein, es ist jedoch auch möglich, dass auf Grund geometrischer oder anderer Anforderungen die Schwimmer 31, 31' oder die Lanzen 32, 32' unterschiedliche Gestaltungen aufweisen. Sie könnten auch in ihrer Funktionsweise unterschiedlich sein. Grundsätzlich ist es auch denkbar, dass der Füllstand in zumindest einem der beiden Räume 13, 14 optisch oder auf andere Weise bestimmt wird. Eine Realisierung einer optischen Messung optimiert die Nutzung der Innenräume entsprechend.

Die Überführungsvorrichtung 20 wird vorliegend durch ein inneres Rohr21 und ein koaxial um dieses angeordnetes äußeres Rohr 24 gebildet, die beide senkrecht zu dem Boden 1 3' des Reaktionsraumes 13 angeordnet sind. Das innere Rohr 21 tritt durch den Boden des Reaktionsraums 13' hindurch und öffnet sich in den Aufnahmeraum 14. Die beiden Rohrdurchmesser sind so bemessen, dass zwischen den Rohren 21, 24 ein schmaler Spalt entsteht, dessen Breite hinreichend gering ist, dass auf eine darin befindliche Flüssigkeit Hebekräfte wirken.

Das äußere Rohr 24 ist an seinem oberen Ende mit einem Verschluss 23, ähnlich einer Kappe versehen. Der Verschluss 23 des äußeren Rohres 24 ruht dabei so auf dem oberen Ende des inneren Rohres 24, dass das äußere Rohr 24 von dem inneren Rohr 21 gestützt wird, quasi getragen wird. Das äußere Rohr 24 weist dabei eine bestimmte Rohrlänge auf, die so kurz ist, dass zwischen dem Boden des Reaktionsraums 13' und dem unteren Ende des äußeren Rohres 24 gerade ein Spalt gebildet wird, der das Hindurchtreten von Flüssigkeit gestattet. Somit kann das Reaktionsprodukt, vorliegend Chlordioxid, aus dem Reaktionsraum 13 durch diesen Spalt zwischen dem unteren Ende des äußeren Rohres 24 und dem Reaktionsraumboden 13' in den Spalt zwischen den Rohren 21, 24 eintreten und emporsteigen. Da das innere Rohr 21 eine Querbohrung als Überlauföffnung 22 aufweist, kann das Reaktionsprodukt durch diese Überlauföffnung 22 in den Innenraum des inneren Rohres 21 übertreten und in den Aufnahmeraum 14 abfließen. Dadurch entsteht im Innenrohr 21 ein Druckgefälle, das sich in das äußere Rohr fortpflanzt und dafür sorgt, dass der Reaktionsraum 13 vollständig entleert wird Von dort kann das Reaktionsprodukt über ein am Boden des Aufnahmeraums 14 angeordnetes Anschluss-Stück 43 einem Verbraucher zugeführt werden. Der Kugelhähn 44 dient der Probenahme und Entleerung des Aufnahmeraumes

Der Fachmann kennt die Gestaltungsmöglichkeiten für eine solche Überlauföffnung 22 und die möglichen Geometrien. Es können eine oder mehrere Querbohrungen verschiedenster Öffnungsquerschnitte eingesetzt werden.

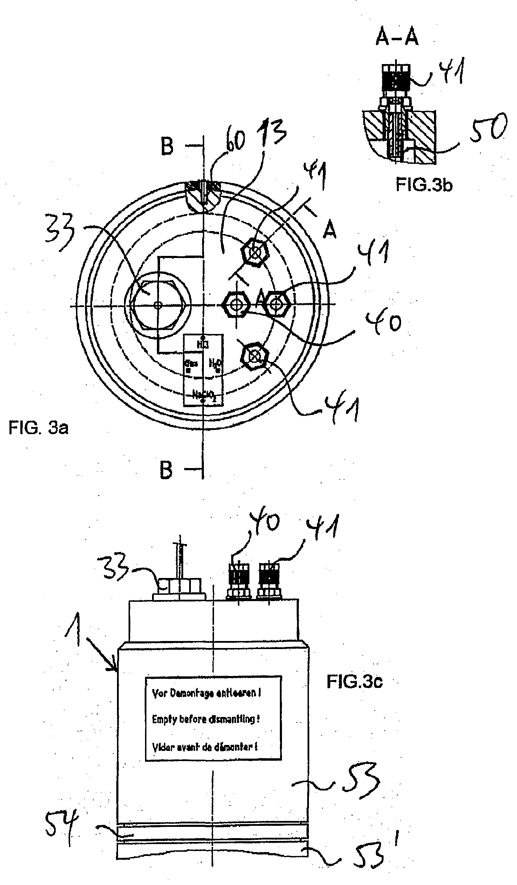

**Fig. 3a** zeigt den Reaktionsraum in der Draufsicht, so dass hier alle drei Anschlussstücke 41 für eine Chlordioxid produzierende Vorrichtung und ein viertes Anschlussstück 51, das mit einem Lüftungsrohr zur Druckentlastung in Verbindung steht, gezeigt sind. Natürlich könnte ein für die Darstellung eines anderen fluiden Reaktionsproduktes geschaffener Reaktionsraum eine entsprechend größere oder kleinere Anzahl an Anschlussstücken aufweisen. Außerdem ist der Schwimmerschalter 33 zu sehen, der die elektronische Verbindung zu einer Regelungseinheit, hier nicht gezeigt, bereit stellt.

Vorliegend mündet jedes der Anschlussstücke 41 in eine Rohrlanze 50 (siehe **Fig. 1**), die tief in den Reaktionsraum 13 ragt. Die Tiefe, bis zu der die entsprechende Rohrlanze 50, die mit einem Lanzenendstück 52 abschließen kann, kann davon abhängig gemacht werden, ob die Rohrlanze einem zeitlich früher oder später zugeführten Reaktanden dient: Vorliegend sind die Edukte Salzsäure, HCl, Natriumchlorit NaGlO₂ und Wasser H₂O. Die Länge der Rohrlanze für Wasser, das zuerst zugeführt wird, könnte größer gewählt werden als die Länge der Rohrlanze für Salzsäure, und die Länge der Rohrlanze für Salzsäure könnte größer gewählt werden als die Länge der Rohrlanze für Natriumchlorit.

Das hier gezeigte Lanzenendstück 52 weist eine Querbohrung auf, die zur verbesserten Strömungsverteilung dient. Es sind auch andere, geeignet ausgebildete Lanzenendstücke denkbar, die die Strömungsverteilung im Reaktionsraum verbessern. Grundsätzlich muss die Rohrlanze jedoch nicht mit einem speziellen Endstück enden.

Ferner ist in der Vorrichtung ein Lüftungsrohr 51, das von dem Anschlussstück 40 in den Reaktionsraum 13, durch den Boden 13' des Reaktionsraumes 13 und bis in einen Kopfraum des Aufnahmeraumes 14 ragt, vorgesehen, um Druckausgleich zu leisten. Es ist über das Anschlussstück 40 mit einem figurativ nicht dargestellten Volumenspeicher gekoppelt, der vorliegend eine expandierbare Tüte umfasst, die sich über ein mit Aktivkohle gefülltes, der Luftreinhaltung dienendes Röhrchen zur Umgebungsluft öffnet.

In **Fig. 4** ist die erfindungsgemäße Vorrichtung 1 in einer Anlage zur Erzeugung einer Chordioxidlösung angeordnet. Die Edukte Wasser, Salzsäure und Natriumchlorit werden aus den entsprechenden Reservoirs 70, 71, die unter der in einem Gehäuse 100 untergebrachten Vorrichtung 1 angeordnet sind, mittels Fördereinrichtungen in den Reaktionsraum 13 der Vorrichtung 1 überführt. Jede Fördereinrichtung wird durch die Regelungseinheit 90 gesteuert. Ferner verfügt die Regelungseinheit 90 über eine Funktion zur Zeitsteuerung. Bei den Fördereinrichtungen handelt es sich vorliegend um Membranpumpen 80, 82 bzw. ein Magnetventil 81, es kann jedoch auch eine Schlauchpumpe,: Hubkolbenpumpe, Kreiselpumpe, Zahnradpumpe oder eine andere geeignete Pumpe verwendet werden.

Die fluidische Verbindung zwischen den Reservoirs 70, 71 und dem Wasser-Zulauf 72 und dem Reaktionsraum 13 wird durch einen Schlauch realisiert, es sind jedoch auch Rohranordnungen oder Kanülen denkbar. Die erfindungsgemäße Vorrichtung 1 ist mit einem Volumenspeicher 91 für den Druckausgleich verbunden, und über einen Aktivkohlefilter 92 zur Atmosphäre offen.

Sämtliche Bauteile der Vorrichtung 1 sind aus einem säureresidenten Material, vorzugsweise aus Polyvinylchlorid PVC. In einem bevorzugten Ausführungsbeispiel ist der Schwimmer aus Polyvinylidenfluorid PVDF.

In **Fig. 3a** ist ein Ausführungsbeispiel der erfindungsgemäßen Vorrichtung 1 gezeigt, bei der die Anschlüsse 40, 41 für zur Realisierung des Druckausgleichs sowie für die Wasser-, Salzsäure- und Natriumchloritzufuhr angeordnet sind.

**Fig. 3b** zeigt ein Anschlussstück 41 aus **Fig. 3a** im Detail, das mit der Rohrlanze 50 verbunden ist. **Fig. 3c** hingegen zeigt eine Seitenansicht des Reaktionsraumes und eines Teils des Aufnahmeraumes der Vorrichtung zur Erzeugung einer wässrigen Chlordioxidlösung,

**Fig. 2** zeigt einen Schnitt durch die Vorrichtung 1 entlang der Linie B-B, die in **Fig. 3a** definiert wird. Die beiden Räume 13, 14 zur Reaktion und zur Aufnahme sind von entsprechenden Reaktor- bzw. Speichergehäusen 53, 53' umgeben, die durch ein Verbindungsstück 54 miteinander verbunden sind. Damit die Passung der beiden Gehäuse 53, 53' optimal ist, sind Passkerbstifte 60 vorgesehen, die das übereinander Anordnen der Gehäuse 53, 53' und des Zwischenstücks 54 nur in einer exakten Position erlauben. Damit kommen korrespondierende Öffnungen aus Reaktions- und Aufnahmeraum 13, 14 optimal in Kongruenz.

Damit wird das Verfahren zur Erzeugung eines fluiden Reaktionsprodukts unter Verwendung der erfindungsgemäßen Vorrichtung so betrieben, dass zunächst ein erster Reaktand in einen Reaktionsraum überführt und dort in Kontakt mit einer Vorrichtung zur Füllstandsbestimmung gebracht wird. Damit kann diese den Füllstand des Reaktanden messen und bei Erreichen eines ersten Schaltpunkts ein Signal auslösen. Das Signal wird an die Regelungseinheit übertragen, so dass diese entsprechend eine Operation zur Regelung der Zuführung der Reaktanden ausführt. Die vorstehenden Schritte werden wiederholt, bis eine gewünschte Anzahl an Reaktanden sequenziell und in Abhängigkeit eines entsprechenden Schaltpunktes geregelt in den Reaktionsraum zugeführt worden ist. Damit gelingt es, auf einfache Weise definierte Volumina gewünschter Reaktanden miteinander zur Reaktion zu bringen, ohne dass Dosierfehler auftreten können. Eine gleich bleibende Produktqualität wird somit gesichert, bei gleichzeitig vereinfachter Bauweise des Reaktors, so dass das Verfahren insgesamt ökonomisch durchführbar ist.

Wird das Verfahren zur Erzeugung von Chlordioxid eingesetzt, so kann mit der Zufuhr von Wasser aus einem ersten Reservoir in den leeren Reaktionsraum begonnen werden. Der Wasserpegel steigt bis zum ersten Schaltpunkt an, dann wird von der ersten Vorrichtung zur Füllstandsbestimmung ein Signal an die Regelungseinheit übertragen, woraufhin die Zufuhr von Wasser gestoppt wird und die Zufuhr von Salzsäure aus einem zweiten Reservoir in den Reaktionsraum beginnt. Erreicht der Flüssigkeitspegel den zweiten Schaltpunkt, so überträgt die erste Vorrichtung zur Füllstandsbestimmung erneut ein Signal an die Regelungseinheit, woraufhin die Zufuhr von Salzsäure gestoppt wird und die Zufuhr von Natriumchlorit aus einem dritten Reservoir gestartet wird. Erreicht der Flüssigkeitspegel den dritten Schaltpunkt, so gibt die erste Vorrichtung zur Füllstandsbestimmung ein Signal an die Regelungseinheit aus, woraufhin die Zufuhr von Natriumchlorit gestoppt wird. Optional kann nun eine Reifezeit für die Reaktion der Edukte zu dem Reaktionsprodukt eingehalten werden, in der das Verfahren ruht. Hierbei kann es sich um eine Zeit im Bereich von 1 Sekunde bis zu 60 Minuten handeln, vorzugsweise wird die Reifezeit etwa 15 bis 35 Minuten betragen. Nach dem Ablauf der Reifezeit bewirkt die Regelungseinheit das weitere Zuführen von Wasser aus dem ersten Reservoir. Wasser wird so lange zugeführt, bis der Flüssigkeitspegel den vierten Schaltpünkt erreicht, und die erste Vorrichtung zur Füllstandsbestimmung ein Signal an die Regelungseinheit überträgt, woraufhin die Zufuhr von Wasser gestoppt wird. Damit ist zunächst die Produkterzeugung abgeschlossen.

Damit die Vorrichtung zur Erzeugung des Chlordioxid weiter betrieben werden kann, wird das Produkt in einen Aufnahme- oder Speicherraum überführt, von wo es einem Verbraucher zugeführt werden kann. Meldet die zweite Vorrichtung zur Füllstandsbestimmung im Aufnahmeraum der Regelungseinheit sodann, dass der Aufnahmeraum leer ist, veranlasst die Regelungseinheit Wasserzufuhr im Reaktionsraum, was den Anstieg der Flüssigkeit im Kapillarspalt des Siphons bis zum Überlauf bewirkt, so dass das Produkt in den Aufnahmeraum überführt wird. Der dort angestiegene Flüssigkeitspegel bewirkt unmittelbar, wegen der Kopplung der Vorrichtung zur Füllstandsbestimmung im Aufnahmeraum mit der Regelungseinheit, Unterbrechung der Wasserzufuhr im Reaktionsraum. Die Entleerung des Reaktionsraums über die Überführungsvorrichtung unter Heberwirkung veranlasst ein vollständiges Leersaugen des Reaktionsraumes.

Meldet der Schwimmer im Reaktionsraum vollständige Entleerung, beginnt von neuem das Einfüllen der Edukte. Die fertige Lösung kann aus dem Aufnahmeraum einem Verbraucher zugefügt werden.

Damit kann quasi-kontinuierlich ein Verbraucher mit Chlordioxid versorgt werden, das in stets gleich bleibender Qualität bereitsteht. Die erfindungsgemäße Vorrichtung lässt sich, wie gezeigt in **Fig. 4**, in einem Gehäuse 100 anordnen, das nahe dem Verbraucher lokalisiert werden kann, so dass über Schnittstellen an Verbraucher und Aufnahmeraum 14 eine betriebsbereite fluidische Verbindung vorliegt. Wenn die Anlage hängend an einer Wand angeordnet wird, oder von einem Gestell gehalten wird, so lassen sich die Reservoirs 71, 70 bequem unter dem Gehäuse platzieren, wodurch eine Platz sparende Anordnung gegeben ist.

Alternativ kann mit der erfindungsgemäßen Vorrichtung, wie sie in Figuren **1a****,** **2a** **und** **3d** **sowie 4a** gezeigt ist, Natriumhypochlorit erzeugt werden, wenn im Reaktionsraum 13 eine Elektrolysezelle bereitgestellt wird. Diese wird über den Kopf des Reaktors entsprechend mit einer Energiezufuhr gekoppelt. Da hier nur die Zufuhr von Wasser und einer Solelösung aus Natriumchlorid erforderlich ist, steht lediglich, wie in **Fig. 4b** gezeigt ein Salzbehälter 200 als Solereservoir bereit. Der Salzbehälter 200 wird bis zu einem bestimmen Niveau mit handelsüblichen Salztabletten gefüllt, wobei sich nach einiger Zeit eine gesättigte Salzkonzentration einstellt. Weiter wird Wasser als Reaktand benötigt, das dem Reaktor über ein entsprechendes Anschlussstück 42 zugeführt wird. Ein solches Anschlussstück dient auch der Solezuführung.

Das Wasser kann ferner vorteilhaft wird über den Wasserenthärter 4 geleitet warden, ehe es in den Salzbehälter 200 zur Soleerzeugung oder als Verdünnungswasser in den Reaktionsraum 13 geführt wird. Entsprechend wird eine Wasserzuführung 72 nach der Wasserenthärtungseinheit 92 mittels T-Stück in zwei Leitungen 72' verteilt. Die in den Reaktionsraum 13 führende Wasserzuführleitung 72' kann durch ein Magnetventil 81 geführt werden. Der durch die Wasserzuführleitung 72' versorgte Salzbehälter 200 wird mittels Schwimmerventil permanent auf ein bestimmtes Wasserniveau gefüllt wird.

Über das Anschlussstück 42 wird vorliegend beim.Beginn des Betriebs der Vorrichtung Solelösung als erster Reaktand über eine in den Reaktionsraum reichende Rohrlanze 50 in den Reaktionsraum 13 überführt. Die Salzlösung wird mittels der Dosierpumpe 80' in den Reaktionsraum 13 dosiert, bis der Schwimmer 31 ein bestimmtes Niveau, also einen ersten Schaltpunkt, erreicht. Die Dosierpumpe 81', die über eine Steuerung mit dem Schaltpunkt in kommunikativer Verbindung steht, schaltet dann wieder ab. Danach öffnet das Magnetventil 81 in der Wasserzuführung 72, und enthärtetes Wasser wird ebenfalls in den Reaktionsraum 13 dosiert, bis auch hier der Schwimmer 31 einen weiteren Schaltpunkt, respektive ein weiteres Niveau erreicht. Anschließend schließt das Magnetventil 81 und die Befüllung des Reaktionsraums 13 ist abgeschlossen.

Analog wie in der in Fig. 1 gezeigten Ausführungsform der erfindungsgemäßen Vorrichtung wird der Schwimmer 31 sich an der Schwimmerlanze 32 entlang der Längsachse der Lanze 32 nach unten und oben bewegen, um den gewünschten Füllstand zu messen. Dieser gewünschte Füllstand ist der oben beschriebene "Schaltpunkt", an dem das Signal, dass der gewünschte Füllstand erreicht ist, an eine in **Fig. 4a** gezeigte Regelungseinheit 90 übermittelt wird.

Nun wird die Elektrolysezelle 600 aktiviert, und die Elektrolyse läuft über einige Minuten, vorzugsweise im Bereich von 1 bis 60 Minuten, abhängig vom umzusetzenden Solevolumen, ab.

Während dieser Reaktionszeit entsteht die Natriumhypochlorit-Lösung. Nach Deaktivierung (Abschalten) der Elektrolysezelle 600 wird erneut das Magnetventil 81 geöffnet, und weiteres Wasser wird als Verdünnungswasser zusätzlich in den Reaktionsraum 13 dosiert. Das ansteigende Niveau der Lösung sorgt in der Überführungsvorrichtung 20 für eine Hebewirkung, und die erzeugte Natriumhypochlorit-Lösung fließt durch die Überlauföffnung 22 und durch das innere Rohr 21 in den Aufnahmeraum 14.

Erreicht der Schwimmer 31 im Reaktionsraum 14 einen vorgegebenen, bestimmten Schaltpunkt - der Schwimmer ist dann als Schwimmer 30 stricheliert gezeichnet - so schließt das Magnetventil 81 wieder. Nach einiger Zeit gelangt somit die gesamte Lösung vom Reaktionsraum 13 in den Aufnahmeraum 14.

Wenn die gesamte Mischung überführt ist, und dies durch den im Aufnahmeraum befindlichen Schwimmer 31, gemessen wird, der bei Maximalfüllstand als Schwimmer 30' stricheliert gezeichnet ist, so wird die Erzeugung der Natriumhypochloritlösung im Reaktionsraum 13 erneut ausgelöst und es wird wieder, zuerst die Salzlösung und danach das enthärtete Wasser eingefüllt und danach die Elektrolysezelle 600 aktiviert

Wird dann die Zelle 600 wieder deaktiviert, kann die Position des Schwimmers 31' als ausschlaggebend eingestellt sein, ob das Magnetventil 81 wieder öffnet oder nicht. Ist das Flüssigkeits-Niveau im Aufnahmeraum 14 oberhalb des ersten Schaltkontaktes der Lanze 32', bleibt das Magnetventil 81 geschlossen. Liegt auf Grund der Abdosierung mittels der Abdosierpumpe für Natriumhypochlorit 82', siehe **Fig. 4b**, das Flüssigkeits-Niveau unterhalb des ersten Schaltpunktes der Schwimmerlanze 32', so öffnet das Magnetventil 81, um Wasser in den Reaktionsraum 13 zu dosieren, um wiederum den Hebeeffekt auszulösen, der das Abfließen der Lösung vom Reaktionsraum 13 in den Aufnahmeraum 14 ermöglicht.

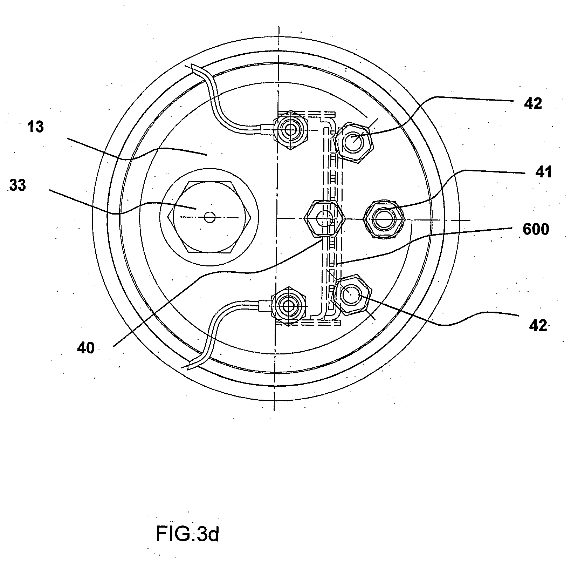

Der bei der Reaktion entstehende Wasserstoff wird über den Anschluss 40, siehe **Fig. 3d**, abgeführt.

Der in **Fig. 1** gezeigte Schwimmer arbeitet gleich wie der in **Fig. 1a** gezeigte. Er kann mit der Schwimmerlanze auf magnetische, optische oder kapazitive Weise oder auch auf andere Weise wechselwirken. In der in den **Figs. 1****,** **1a** gezeigten Kombination aus Schwimmer 31 und Lanze 32 ist der Schwimmer mit einem Magneten ausgestattet, der mit elektrischen Kontakten der Schwimmerlanze 32 kommuniziert. Der Schwimmer 31 schwimmt somit bis zu einem in der Lanze 32 markierten Schaltpunkt auf, dann erfolgt eine Kommunikation zwischen Schwimmer 31 und Lanze 32, die anzeigt, dass das gewünschte Niveau des Reaktanden im Reaktionsraum 13 erreicht ist, und die Zufuhr des Reaktanden wird gestoppt. Danach kann die Zufuhr eines zweiten Reaktanden durch eine Operation der Regelungseinheit veranlasst werden.

Die Überführungsvorrichtung, die in **Fig. 1** gezeigt ist, entspricht der in **Fig. 1a** gezeigten. Aus **Fig. 1a** wird überdies deutlich, wie das Entlüftungsrohr 50, das der Abfuhr von Wasserstoffgas dient, angeordnet ist. Die Abfuhr von Wasserstoff, auch aus dem Kopfraum des Reaktionsraumes 13, erfolgt hier direkt über entsprechende Leitungen 50 im Aufnahmeraum, bzw. das Anschlussstück 40. **Fig. 2a** zeugt die Vorrichtung 10 von der rückwärtigen Seite und verdeutlicht die Anordnung der Schwimmer 31' und der Schaltpunkte 30, 30'.

**Fig. 3d** zeigt den Reaktionsraum in der Draufsicht, so dass hier alle Anschlussstücke 40, 41, 42 gezeigt werden, darüberhinaus wird die Geometrie der Elektrolysezelle 600 deutlich, die eine halbzylindrische Aussparung aufweist, so dass sie an die Überlaufvorrichtung angepasst werden kann.

Die gesamte Erzeugungsanlage mit der Vorrichtung 10 wird über einen Wasseranschluss 300 mit Wasser versorgt, wobei der benötigte Vordruck für die Anlage vorteilhaft zwischen 2 - 7 bar liegen kann. Bei einem Vordruck der über 7 bar liegt, sollte ein Druckreduzierventil 310, siehe **Fig. 4b**, eingesetzt werden, um die Anlagenkomponenten nicht zu beschädigen. Liegt der benötigte Vordruck unterhalb bar, kann eine Druckerhöhungs-Einrichtung 320 eingesetzt werden.

**BEZUGSZEICHENLISTE**

| | |
|---|---|
| 1 | Vorrichtung zur Erzeugung eines fluiden Reaktionsprodukts |
| 6 | Überströmventil |
| 10 | Vorrichtung zur Erzeugung eines fluiden Reaktionsprodukts |
| 13, 13' | Reaktionsraum mit Boden |
| 14 | Aufnahmeraum |
| 20 | Überführungsvorrichtung |
| 21 | Inneres Rohr |
| 22 | Überlaufvorrichtung /Querbohrung |
| 23 | Verschluss |
| 24 | Äußeres Rohr |
| 30, 30' | Vorrichtung zur Füllstandsbestimmung |
| 31, 31' | Schwimmer |
| 32, 32' | Schwimmerlanze |
| 33, 33' | Schwimmerschalter/Füllstandssensor |
| 40 | Anschluss-Stück zur Entgasung |
| 41 | Anschluss-Stück für Gasausgleich |
| 42 | Anschlussstück für die Dosierung von Wasser oder Salzlösung |
| 43 | Anschluss-Stück Produktentnahme |
| 44 | Auslass |
| 50 | Rohrlanze |
| 50' | Entlüftungsleitung |
| 51 | Lüftungsrohr für Druckausgleich |
| 52 | Lanzenendstück |
| 53 | Gehäuse des Reaktionsraums |
| 53' | Gehäuse des Aufnahmeraums |
| 54 | Zwischenstück |
| 60 | Passkerbstift |
| 70,71 | Reservoir |
| 72,72' | Wasser-Zulauf |
| 73 | Sole-Zulauf |
| 80, | Membranpumpe, Pumpe f. Salzlösung |
| 81 | Magnetventil |
| 82 | Membranpumpe |
| 82' | Pumpe f. Natriumhypochlorit |
| 90 | Regelungseinheit |
| 91 | Volumenspeicher |
| 92 | Wasserenthärtungseinheit |
| 100 | Gehäuse |
| 200 | Salzbehälter |
| 300 | Betriebswasserzuleitung |
| 310 | Druckreduziereinheit |
| 320 | Druckerhöhungseinheit |
| 600 | Elektrolysezelle |
| 600' | Innenraum d. Elektrolysezelle |

## Patentansprüche

1. Vorrichtung (1, 10) zur Erzeugung eines fluiden Reaktionsprodukts, wobei die Vorrichtung einen Reaktor mit einem Reaktionsraum (13), eine in dem Reaktionsraum (13) angeordnete erste Vorrichtung zur Füllstandsbestimmung (30), eine Mehrzahl fluidischer Verbindungen zur Zuführung von fluiden Reaktanden in den Reaktionsraum (13) und eine Regelungseinheit (90) umfasst und die erste Vorrichtung zur Füllstandsbestimmung (30) in dem Reaktionsraum (13) mit den zugeführten Fluiden in direktem Kontakt steht, **dadurch gekennzeichnet, dass** die erste Vorrichtung zur Füllstandsbestimmung (30) zumindest eine Anzahl von Schaltpunkten umfasst, die der Anzahl der zugeführten Reaktanden entspricht, die mit der Regelungseinheit (90) operativ gekoppelt sind, sodass die Zuführung der fluiden Reaktanden in den Reaktionsraum (13) geregelt und sequenziell durchführbar ist, wobei der Reaktionsraum (13) durch eine Überführungsvorrichtung (20) mit Heberwirkung in fluidischer Verbindung mit einem Aufnahmeraum (14) zur Aufnahme des erzeugten fluiden Reaktionsprodukts steht und die Überführungsvorrichtung (20) zwischen dem Reaktionsraum (13) und dem direkt unter dem Reaktionsraum (13) angeordneten Aufnahmeraum (14) bereitgestellt ist.

2. Vorrichtung (1, 10) nach Anspruch 1, **dadurch gekennzeichnet, dass** die Vorrichtung (1, 10) eine in dem Aufnahmeraum (14) angeordnete, zweite Vorrichtung zur Füllstandsbestimmung (30') aufweist, die in direktem Kontakt mit in den Aufnahmeraum (14) überführtem Reaktionsprodukt steht und die zumindest einen Schaltpunkt aufweist, der mit der Regelungseinheit (90) in operativem Kontakt steht, so dass die Überführung des Reaktionsprodukts aus dem Reaktionsraum (13) in den Aufnahmeraum (14) regelbar ist.

3. Vorrichtung nach Anspruch 1 oder 2, **dadurch gekennzeichnet, dass** die Überführungsvorrichtung (20) ein inneres Rohr (21) und ein koaxial um dieses angeordnetes äußeres Rohr (24) aufweist, die beide im Wesentlichen senkrecht zu einem Boden (13') des Reaktionsraumes (13) angeordnet sind, wobei das innere Rohr (21) den Reaktionsraumboden (13') durchdringt und sich in den Aufnahmeraum (14) öffnet, und wobei zwischen den Rohren (21, 24) ein erster Spalt mit einer Spaltbreite vorliegt, die geeignet ist, das fluide Reaktionsprodukt durch Hebekräfte im Spalt ansteigen zu lassen, und wobei das äußere Rohr (24) an einem oberen Ende mit einem Verschluss (23) versehen ist.

4. Vorrichtung nach Anspruch 3, **dadurch gekennzeichnet, dass** der Verschluss (23) des äußeren Rohres (24) mit dem oberen Ende des inneren Rohres in Verbindung steht, wodurch das äußere Rohr (24) von dem inneren Rohr (21) gestützt ist und zwischen einem unteren Ende des äußeren Rohres (24) und dem Boden des Reaktionsraums (13') ein zweiter Spalt vorliegt, der geeignet ist, das Reaktionsprodukt durch den zweiten Spalt in den ersten Spalt zwischen den Rohren (21, 24) eintreten zu lassen, und wobei das innere Rohr (21) eine Überlauföffnung (22), insbesondere eine Querbohrung, am oberen Ende des inneren Rohres (21), aufweist, die geeignet ist, das Reaktionsprodukt von dem ersten Spalt durch die Überlauföffnung (22) durch das innere Rohr (21) in den Aufnahmeraum (14), vorzugsweise in einen mit Auslass (44) für das Reaktionsprodukt versehenen Aufnahmeraum (14), zu überführen.

5. Vorrichtung (1, 10) nach einem der vorhergehenden Ansprüche, **dadurch gekennzeichnet, dass** jeder Reaktand in zumindest einem entsprechenden Reservoir (70, 71, 72) bereitgestellt ist, das mit dem Reaktionsraum (13) in fluidischer Verbindung steht und wobei eine durch die Regelungseinheit (90) gesteuerte, bevorzugt zeitgesteuerte, Fördereinrichtung zur Überführung von Reaktand in den Reaktionsraum (13) in operativer Verbindung mit dem Reservoir (70, 71, 72) steht.

6. Vorrichtung (1, 10) nach einem der vorhergehenden Ansprüche, **dadurch gekennzeichnet, dass** die Vorrichtung zur Füllstandsbestimmung (30, 30') einen Schwimmer (31, 31') und eine Schwimmerlanze (32, 32'), in der die Schaltpunkte angeordnet sind, umfasst.

7. Vorrichtung (1, 10) nach Anspruch 6, **dadurch gekennzeichnet, dass** die Schwimmerlanze (32, 32') der magnetisch betriebenen Vorrichtung zur Füllstandsbestimmung (30, 30') elektrische Kontakte aufweist, die mit einem im Schwimmer (31, 31') angeordneten Magneten kommunizieren, so dass bei Erreichen eines Schaltpunkts ein Signal an die Regelungseinheit (90) übertragbar ist, um eine Operation der Regelungseinheit (90) zu bewirken.

8. Vorrichtung (1, 10) nach einem der vorhergehenden Ansprüche, **dadurch gekennzeichnet, dass** der Reaktionsraum (13) eine Mehrzahl von Rohrlanzen (50), bevorzugt von Rohrlanzen (50) unterschiedlicher Längen, zur Reaktandenzuführung aufweist, und wobei jede Rohrlanze (50) ein Lanzenendstück (52), insbesondere ein Lanzenendstück (52) mit einer Querbohrung, aufweist.

9. Vorrichtung (1, 10) nach einem der vorhergehenden Ansprüche, **dadurch gekennzeichnet, dass** in dem Reaktionsraum (13) eine Elektrolysezelle (600) bereitgestellt ist.

10. Vorrichtung (1, 10) nach Anspruch 9, **dadurch gekennzeichnet, dass** die Elektrolysezelle (600) einen näherungsweise rechteckigen Querschnitt mit halbzylindrischer Längsausnehmung hat und einen mittleren Abschnitt der Überführungsvorrichtung (20) teilweise konzentrisch umgibt.

11. Vorrichtung (1, 10) nach einem der vorhergehenden Ansprüche, **dadurch gekennzeichnet, dass** die Vorrichtung zur Erzeugung einer wässrigen Chlordioxidlösung oder einer wässrigen Natriumhypochloritlösung als fluides Reaktionsprodukt ausgebildet ist, wobei die Vorrichtung zur Aufnahme von fluiden Reaktanden Salzsäure, Natriumchlorit, wässrige Natriumchloridlösung und Wasser ausgebildet ist.

12. Vorrichtung (1. 10) nach einem der vorhergehenden Ansprüche, **dadurch gekennzeichnet, dass** zwischen dem Aufnahmeraum (14) und dem Reaktionsraum (13) eine Vorrichtung zum Druckausgleich, bevorzugt ein Lüftungsrohr (51), am meisten bevorzugt ein Lüftungsrohr (51), das mit einem Aktivkohlefilter (92) in Verbindung stehenden Volumenspeicher (91) ist, angeordnet ist.

13. Verfahren zur Erzeugung eines fluiden Reaktionsprodukts unter Verwendung einer Vorrichtung (1, 10) nach einem der Ansprüche 1 bis 12, umfassend die Schritte:
a) Zuführen eines ersten Reaktanden in einen Reaktionsraum (13),
b) In Kontakt bringen des ersten Reaktanden in dem Reaktionsraum (13) mit der ersten Vorrichtung zur Füllstandsbestimmung (30) und Messen des Füllstands des Reaktanden,
d) Auslösen eines Signals bei Erreichen eines ersten Schaltpunkts und
e) Übertragen des Signals an die Regelungseinheit, so dass die Regelungseinheit eine Operation zur Regelung der Zuführung der Reaktanden ausführt,
f) Wiederholen der Schritte a) bis e), bis eine gewünschte Anzahl an Reaktanden sequenziell in n Sequenzen und in Abhängigkeit von n Schaltpunkten geregelt in den Reaktionsraum (13) zugeführt worden ist.

14. Verfahren nach Anspruch 13, wobei die Schritte a) - e) mit Wasser als erstem Reaktanden, Salzsäure als zweitem Reaktanden, Natriumchlorit als drittem Reaktand und Wasser als viertem Reaktanden durchgeführt werden, und wobei die Zuführung von Wasser bis zum ersten Schaltpunkt, die Zuführung von Salzsäure bis zum zweiten Schaltpunkt, die Zuführung von Natriumchlorit bis zum dritten Schaltpunkt und die erneute Zuführung von Wasser bis zum vierten Schaltpunkt erfolgt.

15. Verfahren nach Anspruch 13, wobei die Schritte a) - e) mit Natriumchloridlösung als erstem Reaktanden und Wasser als zweitem Reaktanden durchgeführt werden, und wobei die Zuführung von Natriumchloridlösung bis zum ersten Schaltpunkt und die Zuführung von Wasser bis zum zweiten Schaltpunkt erfolgt, und wobei nach der Zuführung des Natriumchlorids die Elektrolysezelle (600) über eine gewünschte Zeitdauer betätigt wird.

16. Verfahren nach einem der Ansprüche 13 bis 15, umfassend die Schritte:
- Überführen des Reaktionsprodukts aus dem Reaktionsraum (13) in den Aufnahmeraum (14) und
- Kontaktieren des Reaktionsprodukts mit der Vorrichtung zur Füllstandsmessung (30') im Aufnahmeraum,
- Messen des Füllstands des Reaktionsprodukts,
- Auslösen eines Signals bei Erreichen eines Schaltpunkts N+1, der den Leerstand des Aufnahmeraums (14) anzeigt und
- Übertragen des Signals an die Regelungseinheit, so dass die Regelungseinheit eine Operation zur Regelung der erneuten Zuführung der Reaktanden in den Reaktionsraum (13) ausführt.

## Claims

1. A device (1, 10) for producing a fluid reaction product, wherein the device comprises a reactor with a reaction space (13), a first device for filling level determination (30) which is arranged in the reaction space (13), a plurality of fluidic connections for feeding fluid reactants into the reaction space (13) and a closed-loop control unit (90) and the first device for filling level determination (30) in the reaction space (13) is in direct contact with the fed fluids, **characterised in that** the first device for filling level determination (30) comprises at least a number of switching points which corresponds to the number of fed reactants, said switching points being operatively coupled to the closed-loop control unit (90) so that the feed of the fluid reactants into the reaction space (13) can be carried out in a closed-loop controlled and sequential manner, wherein the reaction space (13) by way of a transfer device (20) with a lifting effect is in fluid connection with a receiving space (14) for receiving the produced fluid reaction product, and the transfer device (20) is provided between the reaction space (13) and the receiving space (14) which is arranged directly beneath the reaction space (13).

2. A device (1, 10) according to claim 1, **characterised in that** the device (1, 10) comprises a second device for filling level determination (30') which is arranged in the receiving space (14), is in direct contact with the reaction product which is transferred into the receiving space (14) and comprises at least one switching point which is in operative contact with the closed-loop control unit (90) such that the transfer of the reaction product out of the reaction space (13) into the receiving space (14) can be closed-loop controlled.

3. A device according to claim 1 or 2, **characterised in that** the transfer device (20) comprises an inner tube (21) and an outer tube (24) which is arranged coaxially around this, said tubes both being arranged essentially perpendicular to a base (13') of the reaction space (13), wherein the inner tube (21) penetrates the reaction space base (13') and opens into the receiving space (14), and wherein a first gap with a gap width which is suitable for letting the fluid reaction product rise in the gap by way of lifting forces is present between the tubes (21, 24), and wherein the outer tube (24) is provided at an upper end with a closure (23).

4. A device according to claim 3, **characterised in that** the closure (23) of the outer tube (24) is in connection with the upper end of the inner tube, by which means the outer tube (24) is supported by the inner tube (21) and a second gap is present between the lower end of the outer tube (24) and the base of the reaction space (13'), said second gap being suitable for letting the reaction product enter through the second gap into the first gap between the tubes (21, 24) and wherein the inner tube (21) comprises a overflow opening (22), in particular a transverse bore, at the upper end of the inner tube (21), said overflow opening being suitable for transferring the reaction product from the first gap through the overflow opening (22) through the inner tube (21) into the receiving space (14), preferably into a receiving space (14) which is provided with an outlet (44) for the reaction product.

5. A device (1, 10) according to one of the preceding claims, **characterised in that** each reactant is provided in at least one corresponding reservoir (70, 71, 72) which is in fluid connection with the reaction space (13) and wherein a delivery device for transferring reactant into the reaction space (13) is in operative connection with the reservoir (70, 71, 72), said delivery device being controlled, preferably time controlled, by the regulation unit (90).

6. A device (1, 10) according to one of the preceding claims, **characterised in that** the device for filling level determination (30, 30') comprises a float (31, 31') and a float lance (32, 32'), in which the switching points are arranged.

7. A device (1, 10) according to claim 6, **characterised in that** the float lance (32, 32') of the magnetically operated device for filling level determination (30, 30') comprises electrical contacts which communicate with a magnet which is arranged in the float (31, 31'), so that on reaching a switching point a signal can be transmitted to the closed-loop control unit (90), in order to effect an operation of the closed-loop control unit (90).

8. A device (1, 10) according to one of the preceding claims, **characterised in that** the reaction space (13) comprises a plurality of tube lances (50), preferably of tube lances (50) of different lengths, for feeding reactants, and wherein each tube lance (50) comprises a lance end piece (52), in particular a lance end piece (52) with a transverse bore.

9. A device (1, 10) according to one of the preceding claims, **characterised in that** an electrolysis cell (600) is provided in the reaction space (13).

10. A device (1, 10) according to claim 9, **characterised in that** the electrolysis cell (600) has an approximately rectangular cross section with a semi-cylindrical longitudinal recess and partly concentrically surrounds a middle section of the transfer device (20).

11. A device (1, 10) according to one of the preceding claims, **characterised in that** the device is designed for producing an aqueous chlorine dioxide solution or an aqueous sodium hypochlorite solution as a fluid reaction product, wherein the device is designed for receiving the fluid reactants hydrochloric acid, sodium chlorite, aqueous sodium chloride solution and water.

12. A device (1, 10) according to one of the preceding claims, **characterised in that** a device for pressure compensation, preferably a venting tube (51), most preferably a venting tube (51) which is in connection with a volume store (91) via an active carbon filter (92), is arranged between the receiving space (14) and the reaction space (13).

13. A method for producing a fluid reaction product whilst using a device (1, 10) according to one of the claims 1 to 12, comprising the steps:
a) feeding a first reactant into a reaction space (13),
b) bringing the first reactant in the reaction space (13) into contact with the first device for filling level determination (30) and measuring the filling level of the reactant,
d) activating a signal on reaching a first switching point and
e) transmitting the signal to the closed-loop control unit, so that the closed-loop control unit carries out an operation for the closed-loop control of the feed of the reactants,
f) repeating the steps a) to e) until a desired number of reactants has been sequentially fed into the reaction space (13) in n sequences and in a manner closed-loop controlled in dependence on n switching points.

14. A method according to claim 13, wherein the steps a) - e) are carried out with water as a first reactant, hydrochloric acid as a second reactant, sodium chlorite as a third reactant and water as a fourth reactant, and wherein the feed of water is effected up to the first switching point, the feed of hydrochloric acid up to the second switching point, the feed of sodium chlorite up to the third switching point and the renewed feed of water up to the fourth switching point.

15. A method according to claim 13, wherein the steps a) - e) are carried out with sodium chloride solution as a first reactant and water as a second reactant, and wherein the feed of sodium chloride solution is effected up to the first switching point and the feed of water up to the second switching point, and wherein the electrolysis cell (600) is actuated over a desired time duration after feeding the sodium chloride.

16. A method according to one of the claims 13 to 15, comprising the steps
- transferring the reaction product out of the reaction space (13) into the receiving space (14) and
- contacting the reaction product with the device for filling level measurement (30') in the receiving space,
- measuring the filling level of the reaction product,
- activating a signal on reaching a switching point N+1 which indicates the empty condition of the receiving space (14) and
- transmitting the signal to the closed-loop control unit, so that the closed-loop control unit carries out an operation for the closed-loop control of the renewed feed of the reactants into the reaction space (13).

## Revendications

1. Dispositif (1, 10) de production d'un produit de réaction fluide, dans lequel le dispositif comprend un réacteur doté d'un espace de réaction (13), un premier dispositif de détermination de niveau (30) disposé dans l'espace de réaction (13), une pluralité de liaisons fluidiques pour l'amenée de réactifs fluides dans l'espace de réaction (13) et une unité de régulation (90) et le premier dispositif de détermination de niveau (30) dans l'espace de réaction est en contact direct avec les fluides amenés, **caractérisé en ce que** le premier dispositif de détermination de niveau (30) comprend au moins un nombre de points de commutation qui correspond au nombre de réactifs amenés, qui sont couplés fonctionnellement avec l'unité de régulation (90) de sorte que l'amenée des réactifs fluides dans l'espace de réaction (13) puisse être réalisée de façon régulée et séquentielle, dans lequel l'espace de réaction (13) est en liaison fluidique, par le biais d'un dispositif de transfert (20) avec effet de siphon, avec un espace de réception (14) pour la réception du produit de réaction fluide généré et le dispositif de transfert (20) est à disposition entre l'espace de réaction (13) et l'espace de réception (14) disposé directement sous l'espace de réaction (13).

2. Dispositif (1, 10) selon la revendication 1, **caractérisé en ce que** le dispositif (1, 10) présente un deuxième dispositif de détermination de niveau (30') disposé dans l'espace de réception (14), qui est en contact direct avec le produit de réaction transféré dans l'espace de réception (14) et qui présente au moins un point de commutation qui est en contact fonctionnel avec l'unité de régulation (90) de sorte que le transfert du produit de réaction de l'espace de réaction (13) dans l'espace de réception (14) puisse être régulé.

3. Dispositif selon la revendication 1 ou 2, **caractérisé en ce que** le dispositif de transfert (20) présente un tuyau intérieur (21) et un tuyau extérieur (24) disposé de façon coaxiale autour de celui-ci, qui sont tous deux disposés sensiblement perpendiculairement par rapport à un fond (13') de l'espace de réaction (13), dans lequel le tuyau intérieur (21) traverse le fond de l'espace de réaction (13') et s'ouvre dans l'espace de réception (14), et dans lequel entre les tuyaux (21, 24) se trouve une première fente ayant une largeur de fente qui est appropriée pour faire monter le produit de réaction fluide par des forces de levage, et dans lequel le tuyau extérieur (24) est doté d'une fermeture (23) à une extrémité supérieure.

4. Dispositif selon la revendication 3, **caractérisé en ce que** la fermeture (23) du tuyau extérieur (24) est en liaison avec l'extrémité supérieure du tuyau intérieur, ce faisant le tuyau extérieur (24) est soutenu par le tuyau intérieur (21) et entre une extrémité inférieure du tuyau extérieur (24) et le fond de l'espace de réaction (13') se trouve une deuxième fente qui est appropriée pour faire entrer le produit de réaction par la deuxième fente dans la première fente entre les tuyaux (21, 24), et dans lequel le tuyau intérieur (21) présente une ouverture de déversement (22), en particulier un alésage transversal à l'extrémité supérieure du tube intérieur (21) qui est approprié pour transférer le produit de réaction de la première fente par l'ouverture de déversement (22) par le tuyau intérieur (21) dans l'espace de réception (14), de préférence dans un espace de réception (14) doté d'une sortie (44) pour le produit de réaction.

5. Dispositif (1, 10) selon l'une quelconque des revendications précédentes, **caractérisé en ce que** chaque réactif est mis à disposition dans au moins un réservoir correspondant (70, 71, 72) qui est en liaison fluidique avec l'espace de réaction (13) et dans lequel un système de transport commandé par l'unité de régulation (90), de préférence à commande temporisée, pour le transfert de réactif dans l'espace de réaction (13) est en liaison fonctionnelle avec le réservoir (70, 71, 72).

6. Dispositif (1, 10) selon l'une quelconque des revendications précédentes, **caractérisé en ce que** le dispositif de détermination de niveau (30, 30') comprend un flotteur (31, 31') et une lance de flotteur (32, 32') dans laquelle les points de commutation sont disposés.

7. Dispositif (1, 10) selon la revendication 6, **caractérisé en ce que** la lance de flotteur (32, 32') du dispositif de détermination de niveau (32, 32') actionné de façon magnétique présente des contacts électriques qui communiquent avec un aimant disposé dans le flotteur (31, 31') de sorte que, lorsqu'un point de commutation est atteint, un signal puisse être transmis à l'unité de régulation (90) pour entraîner une opération de l'unité de régulation (90).

8. Dispositif (1, 10) selon l'une quelconque des revendications précédentes, **caractérisé en ce que** l'espace de réaction (13) présente une pluralité de lances tubulaires (50), de préférence de lances tubulaires (50) de diverses longueurs, pour l'amenée de réactifs, et dans lequel chaque lance tubulaire (50) présente un embout de lance (52), en particulier un embout de lance (52) comportant un alésage transversal.

9. Dispositif (1, 10) selon l'une quelconque des revendications précédentes, **caractérisé en ce que** dans l'espace de réaction (13), une cellule d'électrolyse (600) est mise à disposition.

10. Dispositif (1, 10) selon la revendication 9, **caractérisé en ce que** la cellule d'électrolyse (600) a une section pratiquement rectangulaire comportant des évidements longitudinaux semi-cylindriques et entoure partiellement de façon concentrique un segment médian du dispositif de transfert (20).

11. Dispositif (1, 10) selon l'une quelconque des revendications précédentes, **caractérisé en ce que** le dispositif est conçu pour générer une solution aqueuse de dioxyde de chlore ou une solution aqueuse d'hypochlorite de sodium en tant que produit de réaction fluide, dans lequel le dispositif est conçu pour la réception de réactifs fluides tels que l'acide chlorhydrique, le chlorite de sodium, une solution aqueuse de chlorite de sodium et de l'eau.

12. Dispositif (1, 10) selon l'une quelconque des revendications précédentes, **caractérisé en ce qu'**entre l'espace de réception (14) et l'espace de réaction (13) est disposé un dispositif de compensation de pression, de préférence un tuyau de ventilation (51), de manière préférée entre toutes, un tuyau de ventilation (51) qui est un accumulateur volumétrique (91) en liaison avec un filtre à charbon actif (92).

13. Procédé de génération d'un produit de réaction fluide en utilisant un dispositif (1, 10) selon l'une quelconque des revendications 1 à 12, comprenant les étapes :
a) d'amenée d'un premier réactif dans un espace de réaction (13),
b) de mise en contact du premier réactif dans l'espace de réaction (13) avec le premier dispositif pour la détermination de niveau (30) et de mesure du niveau du réactif,
d) de déclenchement d'un signal lorsqu'un premier point de commutation est atteint et
e) de transmission du signal à l'unité de régulation, de sorte que l'unité de régulation exécute une opération de régulation de l'amenée des réactifs,
f) de répétition des étapes a) à e) jusqu'à ce qu'un nombre souhaité de réactifs ait été amené séquentiellement dans n séquences et régulé en fonction de n points de commutation dans l'espace de réaction (13).

14. Procédé selon la revendication 13, dans lequel les étapes a) à e) sont réalisées avec de l'eau comme premier réactif, de l'acide chlorhydrique comme deuxième réactif, du chlorite de sodium comme troisième réactif et de l'eau comme quatrième réactif, et dans lequel l'amenée d'eau s'effectue jusqu'au premier point de commutation, l'amenée d'acide chlorhydrique s'effectue jusqu'au deuxième point de commutation, l'amenée de chlorite de sodium s'effectue jusqu'au troisième point de commutation et l'amenée d'eau à nouveau s'effectue jusqu'au quatrième point de commutation.

15. Procédé selon la revendication 13, dans lequel les étapes a) à e) sont réalisées avec une solution de chlorure de sodium comme premier réactif et de l'eau comme deuxième réactif, et dans lequel l'amenée de solution de chlorure de sodium s'effectue jusqu'au premier point de commutation et l'amenée d'eau s'effectue jusqu'au deuxième point de commutation, et dans lequel après l'amenée du chlorure de sodium, la cellule d'électrolyse (600) est actionnée sur une durée souhaitée.

16. Procédé selon l'une quelconque des revendications 13 à 15, comprenant les étapes :
- de transfert du produit de réaction de l'espace de réaction (13) dans l'espace de réception (14) et
- de mise en contact du produit de réaction avec le dispositif de mesure de niveau (30') dans l'espace de réception,
- de mesure du niveau du produit de réaction,
- de déclenchement d'un signal lorsqu'un point de commutation N+1 est atteint, qui indique que l'espace de réception (14) est vide et
- de transmission du signal à l'unité de régulation de sorte que l'unité de régulation exécute une opération pour la régulation de la nouvelle amenée de réactifs dans l'espace de réaction (13).
